# EUROPÄISCHE PATENTSCHRIFT

(11) **EP 1 598 572 B1**
(45) Veröffentlichungstag und Bekanntmachung des Hinweises auf die Patenterteilung: **26.09.2007**
(21) Anmeldenummer: 05008338.5
(22) Anmeldetag: 16.04.2005
(51) Int. Cl.: F16F 9/38

(54) **Transportschutz für Kabelenden an Federbeinen**
Transport protection for cable ends at suspension struts
Moyen de protection pour le transport pour des extrémités de câbles

(30) Priorität: 18.05.2004 DE 102004024522
(43) Veröffentlichungstag der Anmeldung: 23.11.2005
(73) Patentinhaber: Dr.Ing. h.c. F. Porsche Aktiengesellschaft, 70435 Stuttgart (DE)
(72) Erfinder: Tardy-Tuch, Georg von, 71272 Malmsheim (DE)

(56) Entgegenhaltungen:
- DE-A1- 3 313 388
- US-A- 5 769 401
- US-B1- 6 345 706
- PATENT ABSTRACTS OF JAPAN Bd. 014, Nr. 033 (M-923), 22. Januar 1990 (1990-01-22) -& JP 01 269742 A (TOKICO LTD), 27. Oktober 1989 (1989-10-27)
- PATENT ABSTRACTS OF JAPAN Bd. 013, Nr. 204 (M-825), 15. Mai 1989 (1989-05-15) & JP 01 026042 A (TOKICO LTD), 27. Januar 1989 (1989-01-27)

## Beschreibung

Die Erfindung betrifft eine Anordnung eines Transportschutzes für Kabelenden an Federbeinen nach dem Oberbegriff des Anspruchs 1.

Bei Federbeinen stellt sich das Problem, dass das Kabelende während des Transportes des Federbeines beschädigt werden kann. Ein solcher Schaden ist nur aufwändig, nämlich durch eine Zerlegung des Federbeines, zu beheben. Aus der DE 33 13 388 A1 ist ein Kraftfahrzeugstoßdämpfer für ein Kraftfahrzeug bekannt, der an seinem Kopfende zur Abdeckung von Leitungen einen umgebenden Sockelabschnitt aufweist.

Aufgabe der Erfindung ist es daher, einen Transportschutz zu schaffen, der das Kabelende von Beschädigungen schützt. Diese Aufgabe wird durch die Merkmale von Anspruch 1 gelöst.

In den Merkmalen der Erfindung gehört es, an dem Ende der Federbeines, an dem das Kabelende aus einer hohlen Kolbenstange heraustritt, einen Rohrabschnitt als Transportschutz vorzusehen, wobei das aufgerollte Kabelende im Inneren des Rohrabschnittes aufgenommen ist. Der Innendurchmesser des Rohrabschnittes ist größer als der Außenbereich des Endbereiches der Kolbenstange gewählt, wobei der Endbereich der Kolbenstange bei üblichen Federbeinen auch eine zum Befestigen der Kolbenstange verwendete Mutter umfasst. Der Rohrabschnitt wird also nur von dem aufgerollten Kabelende gehalten, das sich nach dem Einstecken in den Rohrabschnitt zu entspannen versucht und so an der Innenwand des Rohrabschnittes eine Klemmwirkung erzeugt. Von besonderem Vorteil bei dieser Anordnung ist, dass der Transportschutz dort, wo er seine Schutzwirkung entfalten soll, gehalten ist, nämlich am Kabelende. Am Endbereich der Kolbenstange hingegen kann sich der Transportschutz bewegen. Auf diese Weise ist es möglich, den Transportschutz auch bei der Montage des Federbeines an der Karosserie am Federbein zu belassen und so das Kabelende zu schützen, bis das Federbein in seiner endgültigen, montierten Position ist. Vielmehr kann sich der Rohrabschnitt an einer korrespondierende Öffnung in der Karosserie, durch die das Kabelende hindurchgeführt werden soll, an dieser Öffnung ausrichten. Durch die hiermit erzielte Abdeckung ist insbesondere verhindert, dass das Kabelende über Kanten, Ränder und Vorsprünge des Federbeines verläuft und zwischen diesem Rand, Kante oder Vorsprung und einer Transporteinrichtung gequetscht und damit beschädigt werden kann. Weiterhin wird vermieden, dass das Kabelende zum Anheben des Federbeines ergriffen wird.

Der Endbereich des Rohrabschnittes ist verjüngt auszuführen. Der Rohrabschnitt wird nun so aufgesteckt, dass sein verjüngtes Ende vom Federbein wegweist. Der verjüngte Bereich bildet eine Einführhilfe, die das Hindurchführen des Rohrabschnittes durch die korrespondierende Öffnung in der Karosserie erleichtert.

Um bei der Montage des Federbeines ein sicheres Durchtreten des Rohrabschnittes zu gewährleisten ist es vorgesehen, dass der Rohrabschnitt so lang gewählt ist, dass wenigstens ein Teil, beispielsweise ein Zentimeter des nicht verjüngten Bereiches, im montierten Zustand durch die Karosserieöffnung hindurchtritt.

Vorteilhafte Weiterbildungen der Erfindung sind in einem Unteransprüch beschrieben.

Der Rohrabschnitt ist vorzugsweise aus Pappe hergestellt, da sich dieses Material günstig herstellen, leicht bearbeiten und umweltgerecht entsorgen lässt.

Ein Ausführungsbeispiel der Erfindung ist in dem in den Figuren dargestellten Ausführungsbeispiel näher dargestellt. Es zeigen:
- Fig. 1: einen oberen Bereich eines Federbeines mit einem Kabelende, und
- Fig. 2: eine Schnittdarstellung eines als Transportschutz verwendeten Rohrabschnitt im montierten Zustand.

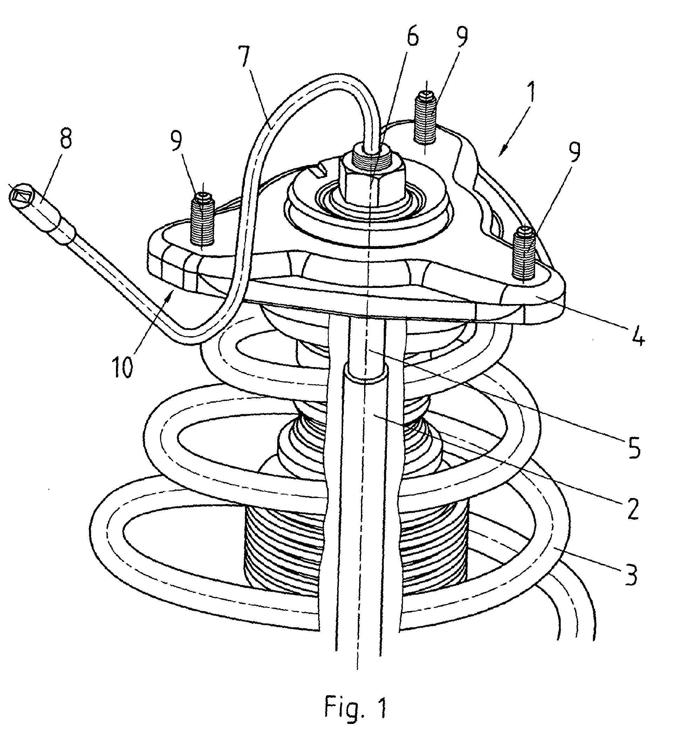

Das in Fig. 1 nur im Bereich seines einen Endbereiches dargestellte Federbein 1 besteht aus einem Dämpfer 2, einer Feder 3 und einem Stützlager 4. Eine Kolbenstange 5 des Dämpfers 2 ist mit dem Stützlager 4 durch eine Verschraubung verbunden, von der hier nur die Mutter 6 dargestellt ist. Die Kolbenstange 5 ist hohl ausgeführt und nimmt ein Kabel auf, von dem nur das aus der Kolbenstange 5 austretende Kabelende 7 in dieser Darstellung sichtbar ist. Endseits ist das Kabelende 7 mit einem Stecker 8 versehen. Zur Befestigung des Stützlagers 4 an einer Fahrzeugkarosserie 13 sind drei Befestigungseinrichtungen, hier Schrauben 9, vorgesehen, die mit dem Stützlager 4 fest verbunden sind.

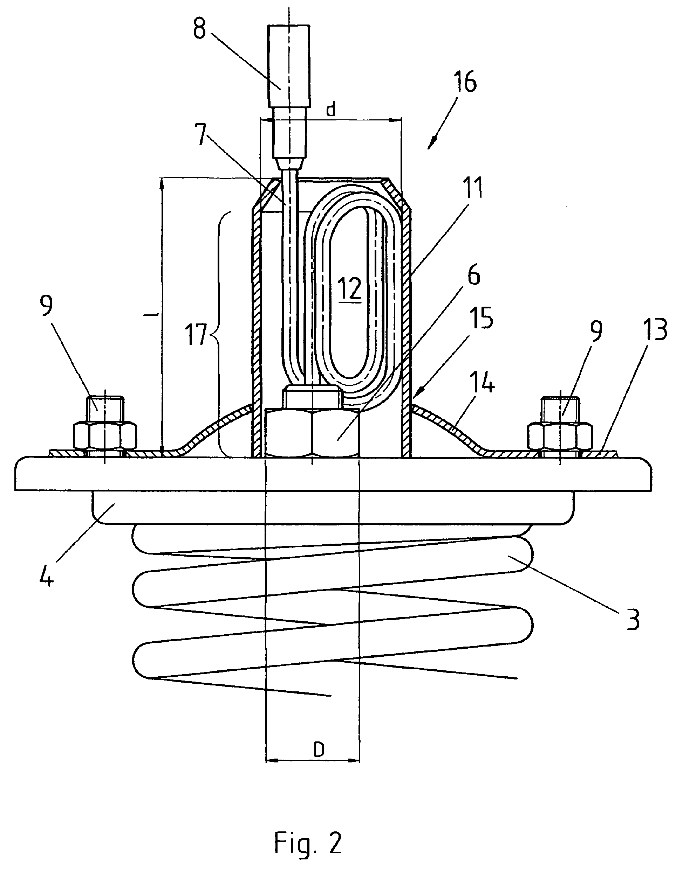

Um zu verhindern, dass das Kabelende 7 während des Transportes des Federbeines 1, wie in Fig. 1 gezeigt, über einen Rand 10 des Stützlagers 4 verläuft und dort beispielsweise beim Anschlagen des Randes 10 an eine Transporteinrichtung gequetscht werden kann, ist das Kabelende 7 in der in Fig. 2 dargestellten Weise aufgerollt in einem Rohrabschnitt 11 gehalten. Beim Aufrollen des Kabelendes 7 zu einem Kabelwickel 12 wurde der Durchmesser des Kabelwickels 12 größer als der Innendurchmesser d des Rohrabschnittes 11 gewählt. Zum Einführen in den Rohrabschnitt 11 musste daher der Kabelwickel 12 zusammengepresst werden und drückt im dargestellten montierten Zustand an die Innenwand des Rohrabschnittes 11, so dass der Kabelwickel 12 an der Innenseite des Rohrabschnittes 11 eine Klemmwirkung erzeugt und den Rohrabschnitt 11 auf diese Weise in seiner Position hält.

Die Fahrzeugkarosserie 13 bildet im Bereich des Stützlagers 4 einen Dorn 14 mit einer zentral, aber nicht zentrisch zur Kolbenstange 5 angebrachten Öffnung 15.

Der Rohrabschnitt 11 ist in seinem oberen, axialen Endbereich 16 mit einem Einzug versehen, d.h. verjüngt ausgeführt. Bei der Montage des Federbeines an der Karosserie 13 tritt zunächst der verjüngte Bereich 16 des Rohrabschnittes 11 durch die Öffnung 15 hindurch. Der verjüngte Bereich 16 wirkt hierbei als Einführhilfe, um den Rohrabschnitt 11 durch eine Bewegung um die Mutter 6 herum so auszurichten, dass er durch die Öffnung 15 hindurchtreten kann. Hierfür ist es erforderlich, dass der Innendurchmesser des Rohrabschnittes 11 deutlich größer als der Außendurchmesser D der Mutter 6 gewählt ist.

Die axiale Länge I des Rohrabschnittes 11 ist so bemessen, dass zumindest das Kabelwickel 12 vollständig aufgenommen ist. Darüber hinaus ist darauf zu achten, dass wenigstens ein Teil des nicht verjüngten Bereiches 17 durch die Öffnung 15 im montierten Zustand hindurchtritt und dort um wenigstens einen Zentimeter hervorsteht, um den Rohrabschnitt 11 sicher ergreifen und aus der Öffnung 15 herausziehen zu können.

Wie in Fig. 2 dargestellt, sind im montierten Zustand des Rohrabschnittes 11 sowohl das zu einem Kabelwickel 12 aufgerollte Kabelende 7 wie auch der Stecker 8 vollständig im Rohrabschnitt 11 aufgenommen, so dass der Rohrabschnitt 11 als Transportschutz für das Kabelende 7 wirkt.

## Patentansprüche

1. Anordnung eines Transportschutzes für Kabelenden (7) an Federbeinen (1) von Kraftfahrzeugen, wobei das Kabelende (7) aus einer hohlen Kolbenstange (5) heraustritt und dieses von einem Rohrabschnitt (11) umgeben ist, welcher am Federbein gehalten ist, **dadurch gekennzeichnet, dass** der Rohrabschnitt (11) als Transportschutz ein aufgerolltes Kabelende (7) aufnimmt, wobei der Innendurchmesser (d) des Rohrabschnittes (11) größer als der Außendurchmesser (D) eines Endbereichs der Kolbenstange (7) ist und der Rohrabschnitt (11) an seinem freien axialen Endbereich (16) verjüngt ausgeführt ist.

2. Anordnung eines Transportschutzes für Kabelenden nach Anspruch 1, **dadurch gekennzeichnet, dass** der Rohrabschnitt (11) aus Pappe besteht.

## Claims

1. A transport protection arrangement for cable ends (7) on suspension struts (1) of motor vehicles, wherein the cable end (7) issues from a hollow piston rod (5) and is surrounded by a tubular part (11) held on the suspension strut, **characterised in that** the tubular part (11), which provides transport protection, receives a rolled-up cable end (7), wherein the inner diameter (d) of the tubular part (11) is greater than the outer diameter (D) of an end region of the piston rod (7), and the tubular part (11) has a tapered formation in its free axial end region (16).

2. A transport protection arrangement for cable ends according to claim 1, **characterised in that** the tubular part (11) is made of cardboard.

## Revendications

1. Système de protection pour le transport d'extrémités de câble (7) sur des jambes de suspension (1) de véhicules automobiles, l'extrémité de câble (7) s'avançant hors d'une tige de piston (5) creuse et celle-ci étant entourée par une partie tubulaire (11) qui est maintenue contre la jambe de suspension, **caractérisé en ce que** la partie tubulaire (11), en tant que système de protection pour le transport, reçoit une extrémité de câble (7) enroulée, le diamètre intérieur (d) de la partie tubulaire (11) étant supérieur au diamètre extérieur (D) d'une zone d'extrémité de la tige de piston (7) et la partie tubulaire (11) étant rétrécie au niveau de sa zone d'extrémité (16) axiale libre.

2. Système de protection pour le transport d'extrémités de câble (7) selon la revendication 1, **caractérisé en ce que** la partie tubulaire (11) est réalisée en carton pâte.
